# EUROPÄISCHE PATENTSCHRIFT

(11) **EP 2 247 670 B1**
(45) Veröffentlichungstag und Bekanntmachung des Hinweises auf die Patenterteilung: **07.09.2011**
(21) Anmeldenummer: 09716680.5
(22) Anmeldetag: 20.02.2009
(51) Int. Cl.: C08L 83/10, C08G 18/61, C08G 77/458

(54) **POLYMERBLENDS ENTHALTEND POLYORGANOSILOXAN-POLYHARNSTOFFCOPOLYMERE**
POLYMER BLENDS CONTAINING POLYDIORGANOSILOXANE UREA COPOLYMERS
MÉLANGES POLYMÈRES CONTENANT DES COPOLYMÈRES DE POLYORGANOSILOXANE/POLYURÉE

(30) Priorität: 29.02.2008 DE 102008000465
(43) Veröffentlichungstag der Anmeldung: 10.11.2010
(73) Patentinhaber: Wacker Chemie AG, 81737 München (DE)
(72) Erfinder: SCHÄFER, Oliver, 84489 Burghausen (DE); SCHERER, Mathias, 84547 Emmerting (DE)
(74) Vertreter: Gössmann, Christoph Tassilo
(86) Internationale Anmeldenummer: PCT/EP2009/052018
(87) Internationale Veröffentlichungsnummer: WO 2009/109470

(56) Entgegenhaltungen:
- DE-A1- 10 137 855
- DE-T2- 69 734 721

## Beschreibung

Die Erfindung betrifft Polymerblends von Organopolysiloxan/Polyharnstoff/Polyurethan-copolymere und deren Verwendung.

Silicone besitzen eine ausgezeichnete Temperatur-, UV-, und Bewitterungsstabilität. Dabei behalten sie ihre elastischen Eigenschaften bei tieferen Temperaturen bei und neigen deshalb auch nicht zur Versprödung. Daneben besitzen sie spezielle wasserabweisende und antihaftende Oberflächeneigenschaften. Durch Einbringen von funktionellen Gruppen in die Silikonhauptkette wie z.B. in EP 0250248 beschrieben, werden Materialien erhalten, welche thermoplastische Eigenschaften besitzen. Die so herstellbaren thermoplastischen Silicone besitzen hervorragende hydrophobe Eigenschaften und ausgezeichnete Reißdehnungen sowie eine außergewöhnliche Transparenz, haben jedoch den Nachteil einer relativ aufwändigen Herstellung aus teuren Edukten und sind damit im Endeffekt für viele Anwendungen zu teuer. Einige Eigenschaften wie z.B. Druckverformungsrest und Haftung sind bei den in EP 0250248 beschriebenen Materialien nicht ausreichend.

Es hat Versuche gegeben diese Materialien durch einfaches Mischen mit anderen Thermoplasten zu verändern bzw. auch preislich attraktiver zu gestalten, sowie einige Eigenschaften der thermoplastischen Materialien zu verbessern. Dies wurde u.a. in US 6846893 beschrieben sowie in Yilgör et al.; Journal of Applied Polymer Science, Vol. 83, 1625-1634 und in Yilgör et al, Journal of Applied Polymer Science, Vol. 84, 535-540. Durch Herstellung von einfachen Polymerblends konnte in den beschriebenen Fällen jedoch keine ausreichende Verträglichkeit der verschiedenen Polymerphasen erreicht werden.

Dies zeigt sich dadurch, dass die mechanischen Eigenschaften der in der US 6846893 gezeigten Beispiele durch das Einmischen des thermoplastischen Siloxans deutlich verschlechtert werden. Die Anwesenheit des thermoplastischen Siloxans wirkt sich hier bezüglich der mechanischen Kennwerte äußerst ungünstig aus.

Aufgabe der der Erfindung ist es, den Stand der Technik zu verbessern, insbesondere wurde nun nach einer Möglichkeit gesucht, die Eigenschaften der thermoplastischen Silikone so gezielt zu verändern, das man vor allem Verbesserungen beim Haftvermögen und bei der Reißfestigkeit der Polymere erhält, ohne jedoch andere Eigenschaften wie z.B. elastisches Verhalten oder die abhäsive Eigenschaften der Silikon-Oberfläche zu opfern.

Gegenstand der Erfindung ist daher eine Polymermischung enthaltend
a) ein Organopolysiloxan/Polyharnstoff/Polyurethan-copolymer (A) der allgemeinen Formel (1) 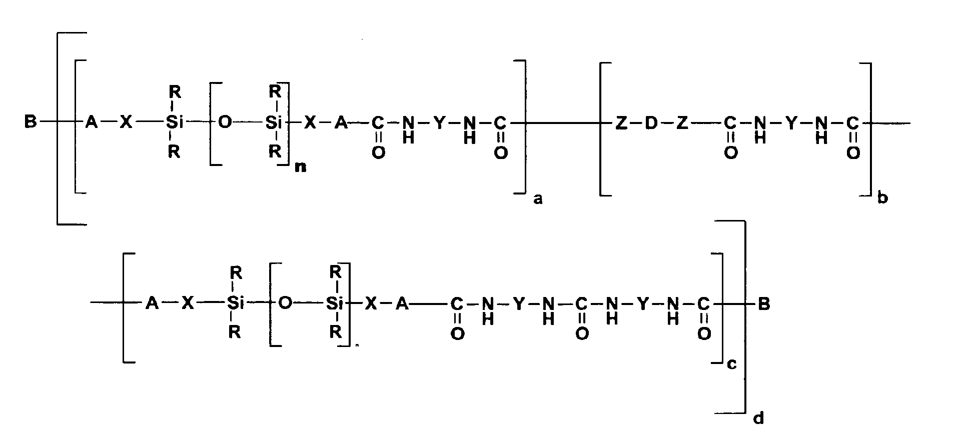 und
b) eine thermoplastisches Polymer, welches eine funktionelle Gruppe aufweist, die aus Epoxy oder Carbonsäure, Carbonsäureester oder Carbonsäureanhydrid ausgewählt wird und gegebenenfalls
c) eine nicht-reaktives thermoplastisches Polymer
   wobei
   - **R**: einen einwertigen, gegebenenfalls durch Fluor oder Chlor substituierten Kohlenwasserstoffrest mit 1 bis 20 Kohlenstoffatomen bedeutet,
   - **X**: einen **CR²₂** -Rest oder einen Alkylen-Rest mit 1-20 Kohlenstoffatomen, in dem einander nicht benachbarte Methyleneinheiten durch Gruppen -O- ersetzt sein können, bedeutet,
   - **A**: ein Sauerstoffatom oder eine Aminogruppe -NR'-,
   - **Z**: ein Sauerstoffatom oder eine Aminogruppe -NR'-,
   - **R'**: Wasserstoff oder einen Alkylrest mit 1 bis 10 Kohlenstoffatomen,
   - **Y**: einen zweiwertigen, gegebenenfalls durch Fluor oder Chlor substituierten Kohlenwasserstoffrest mit 1 bis 20 Kohlenstoffatomen,
   - **D**: einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder - OCOO-, ersetzt sein können,
   - **B**: einen funktionellen oder nicht-funktionellen organischen oder siliziumorganischen Rest,
   - **n**: eine Zahl von 1 bis 4000,
   - **a**: eine Zahl von mindestens 1,
   - **b**: eine Zahl von 0 bis 100,
   - **c**: eine Zahl von 0 bis 100 und
   - **d**: eine Zahl größer 0 bedeuten.

Die Herstellung der erfindungsgemäßen Mischungen erfolgt entweder in Lösung oder Lösungsmittel-frei. Bevorzugt jedoch Lösungsmittel-frei gegebenenfalls unter Zusatz von Additiven wie z.B. Mastizierhilfen. Die Herstellung erfolgt entweder kontinuierlich oder diskontinuierlich, bevorzugt jedoch kontinuierlich. Hierzu werden Mischer oder Kneter oder Extruder nach dem Stand der Technik verwendet. Die Mischung der einzelnen Komponenten erfolgt vorzugsweise in bereits polymerisierter Form, kann jedoch auch durch Zugabe der Monomere und anschließender Polyreaktion im Reaktor bei Anwesenheit der anderen Komponenten erfolgen.

Die Organopolysiloxan/Polyharnstoff/Polyurethan-copolymere werden bevorzugt nach dem Stand der Technik hergestellt, wie z.B. in EP 250248, EP 822951 oder DE 10137855 beschrieben. Ganz besonders bevorzugt wie in DE 10137855 beschrieben.

Der Gehalt an Polydimethylsiloxan-Einheiten der Organopolysiloxan/Polyharnstoff/Polyurethan-copolymeren beträgt bevorzugt zwischen 50 und 98 Gew.%, ganz besonders bevorzugt zwischen 70 und 96 Gew.-% bezogen auf das Gewicht des Organopolysiloxan/Polyharnstoff/Polyurethan-Blockcopolymeren. Der Anteil der Organopolysiloxan/Polyharnstoff/Polyurethancopolymere in der Mischung beträgt vorzugsweise zwischen 5 und 90 Gew.%, bevorzugt 20 -70 Gew%, ganz besonders bevorzugt zwischen 40 und 60 Gew. % bezogen auf das Gewicht der Gesamtmischung des Polymerblends.

Thermoplastische Polymere im Sinne der Erfindung sind solche Polymere, welche eine funktionelle Gruppe aufweisen, die aus Epoxy oder, Carbonsäure, Carbonsäureester oder Carbonsäureanhydrid ausgewählt werden. Bevorzugt werden hierbei Polymere mit Epoxy und Carbonsäureanhydridgruppen, ganz besonders bevorzugt Polymere mit Carbonsäureanhydridgruppen ausgewählt. Der Anteil dieser funktionellen Gruppe am thermoplastischen Material b) beträgt zwischen vorzugsweise 0,1 und 40 Gew.-%, bevorzugt 0,1 und 15 Gew.% besonders bevorzugt 0,3 und 10 Gew.% bezogen auf das Gewicht des thermoplastischen Materials b). Der Anteil des reaktiven Thermoplasten in der Mischung beträgt vorzugsweise zwischen 5 und 95 Gew.%, bevorzugt zwischen 5 und 80 Gew.% und besonders bevorzugt zwischen 5 und 60 Gew. % bezogen auf das Gewicht des gesamten Polymerblends. Vorzugsweise werden hier Copolymere ethylenisch ungesättigter Verbindungen wie z.B. Ethylen, Propylen, Butadien, Isopren, Vinylacetat, Ester der Acrylsäure bzw. Methacrylsäure, Styrol, Vinylchlorid, Glycidylmethacrylat, Maleinsäureanhydrid, Acrylsäure oder Methacrylsäure verwendet. Diese werden entweder direkt bei der Copolymerisation mit den oben beschriebenen funktionellen Gruppen durch Copolymerisation entsprechender Monomere wie z.B. Glycidylmethacrylat, Maleinsäureanhydrid, Acrylsäure oder Methacrylsäure mit den entsprechenden funktionellen Gruppen ausgerüstet oder auch nachträglich durch polymeranaloge Umsetzungen wie z.B. Epoxidierungsreaktionen, besonders bevorzugt ist ein Methacrylsäureanhydridcopolymer. Beispiele für solch erfindungsgemäßen Thermoplasten sind Produkte aus der LOTADER®-Familie, Produkte aus der OREVAC®-Familie, oder Produkte der ADMER®-Familie.

Ein weiterer Gegenstand ist ein Verfahren zur Herstellung einer Polymermischung, wobei a) ein Organopolysiloxan/ Polyharnstoff/Polyurethan-Blockcopolymer (A) und b) ein thermoplastisches Polymer, welches eine funktionelle Gruppe aufweist und gegebenenfalls
c) ein nicht-reaktives thermoplastisches Polymer vermischt werden.

Die Mengen und Beschreibungen für ein Organopolysiloxan/ Polyharnstoff/Polyurethan-Blockcopolymer (A) und b) ein thermoplastisches Polymer, welches eine funktionelle Gruppe aufweist und gegebenenfalls
c) ein nicht-reaktives thermoplastisches Polymer sind oben beschrieben.

Beim erfindungsgemäßen Verfahren zur Herstellung einer Polymermischung erfolgt das Mischen bei einer Temperatur von vorzugsweise 30 °C bis 240 °C, bevorzugt bei 150 °C bis 220 °C durchgeführt wird.

Zusätzlich können noch vorzugsweise zwischen 0 und 70 Gew.-% bezogen auf das Gewicht der gesamten Polymermischung nicht reaktive Polymere wie z.B. Polyester, Polyamide, Polyolefine, hologenierte Polyolefine, Polyacrylate oder Polymethacrylate, Styrol-Acrylnitril-Copolymere, Polycarbonate, Polyvinylacetate oder Polvinylacetat-Ethylen-Copolymere in den erfindungsgemäßen Polymerblends enthalten sein.

Überraschenderweise wurde gefunden, dass bei Verwendung von Polymeren, welche eine chemische Reaktivität gegenüber Harnstoff-, Urethan- oder Amidfunktion aufweisen, eine deutliche Optimierung des Eigenschaftsprofils erreicht werden kann.

Die erfindungsgemäßen Polymerblends zeigen hervorragende Eigenschaften bezüglich Haftung und Tieftemperaturelastizität in Spritzgussanwendungen für z.B. den Elektronik- und Medizinbereich, oder in Extrusionsanwendungen für Fasern oder technischen Folien.

Bevorzugte Anwendungen der erfindungsgemäßen Polymermischungen sind Verwendungen als Bestandteil in Kleb- und Dichtstoffen, als Basisstoff für thermoplastische Elastomere wie beispielsweise Kabelumhüllungen, Schläuche, Dichtungen, Tastaturmatten, für Membranen, wie selektiv gasdurchlässige Membranen, für Beschichtungsanwendungen z.B. in Antihaftbeschichtungen, gewebeverträglichen Überzügen, flammhemmenden Überzügen und als biokompatible Materialien, als Prozesshilfsmittel bei der Thermoplastextrusion und bei der Extrusion von Faserverbundwerkstoffen.
Weitere Anwendungsmöglichkeiten sind Dichtstoffe, Additive für die Polymerverarbeitung, anti-fouling Überzüge, Kosmetika, Körperpflegemittel, Lackadditive, Hilfsstoff in Waschmitteln und Textilbearbeitung, zum Modifizieren von Harzen oder zur Bitumenmodifizierung, als Kunststoffadditiv z.B. als Schlagzähverbesserer oder Flammschutzmittel, als Material für Entschäumerformulierungen, als Verpackungsmaterial für elektronische Bauteile, in Isolations- oder Abschirmungsmaterialien, in Kabelummantelungen, als Additiv für Putz-, Reinigungs- oder Pflegemittel, als Additiv für Körperpflegemittel, als Beschichtungsmaterial für Holz, Papier und Pappe, als Formentrennmittel, als Beschichtungsmaterial für Textilfasern oder textile Gewebe, als Beschichtungsmaterial für Naturstoffe wie z.B. Leder und Pelze, als Material für Membranen und als Material für photoaktive Systeme z.B. für lithographische Verfahren, optische Datensicherung oder optische Datenübertragung.

Alle vorstehenden Symbole der vorstehenden Formeln weisen ihre Bedeutungen jeweils unabhängig voneinander auf.

In den folgenden Beispielen sind, falls jeweils nicht anders angegeben, alle Mengen- und Prozentangaben auf das Gewicht bezogen und alle Drücke 0,10 MPa (abs.). Die Erweichungsbereiche wurden durch TMA bestimmt.

### Beispiel 1

In einem Zweiwellenkneter der Firma Collin, Ebersberg mit 6 Heizzonen und einer Entgasungszone wurde ein Gemisch aus 60 Gew. % GENIOMER 80, WACKER CHEMIE AG (Polysiloxan-Harnstoff-Copolymer, Molekulargewicht Mw = 135.000 Dalton) und 40 Gew. % LOTADER 4403, Fa. ARKEMA (Ethylen- Methacrylsäureester-Methacrylsäureanhydrid-Copolymer mit 0,3 % Methacrylsäureanhydrid-Anteil)(= Terpolymer) zudosiert und in der Wärme miteinander compoundiert. Das Temperaturprofil der Heizzonen war wie folgt programmiert: Zone 1 40°C, Zone 2 140°C, Zone 3 170°C, Zone 4 185°C, Zone 5 185°C, Zone 6 175°C. Die Drehzahl betrug 120 U/min. An der Düse des Extruders konnte ein Polydimethylsiloxan-Polyharnstoff-Copolymer/Terpolymer-Blend abgenommen und nach Abkühlen in einem Wasserbad granuliert werden.

### Beispiel 2

In einem Zweiwellenkneter der Firma Collin, Ebersberg mit 6 Heizzonen und einer Entgasungszone wurde ein Gemisch aus 60 Gew. % GENIOMER 140, WACKER CHEMIE AG (Polysiloxan-Harnstoff-Copolymer, Molekulargewicht Mw = 65.000 Dalton) und 40 Gew. % LOTADER 4403, Fa. ARKEMA (Ethylen- Methacrylsäureester-Methacrylsäureanhydrid-Copolymer mit 0,3 % Methacrylsäureanhydrid-Anteil)(= Terpolymer) zudosiert und in der Wärme miteinander compoundiert. Das Temperaturprofil der Heizzonen war wie folgt programmiert: Zone 1 40°C, Zone 2 140°C, Zone 3 170°C, Zone 4 190°C, Zone 5 190°C, Zone 6 175°C. Die Drehzahl betrug 120 U/min. An der Düse des Extruders konnte ein Polydimethylsiloxan-Polyharnstoff-Copolymer/Terpolymer-Blend abgenommen und nach Abkühlen in einem Wasserbad granuliert werden.

### Beispiel 3

In einem Zweiwellenkneter der Firma Collin, Ebersberg mit 6 Heizzonen und einer Entgasungszone wurde ein Gemisch aus 60 Gew. % GENIOMER 60, WACKER CHEMIE AG (Polysiloxan-Harnstoff-Copolymer Molekulargewicht Mw = 85.000 Dalton)und 40 Gew. % LOTADER 4403, Fa. ARKEMA (Ethylen- Methacrylsäureester-Methacrylsäureanhydrid-Copolymer mit 0,3 % Methacrylsäureanhydrid-Anteil) (= Terpolymer) zudosiert und in der Wärme miteinander compoundiert. Das Temperaturprofil der Heizzonen war wie folgt programmiert: Zone 1 40°C, Zone 2 110°C, Zone 3 120°C, Zone 4 140°C, Zone 5 140°C, Zone 6 135°C. Die Drehzahl betrug 120 U/min. An der Düse des Extruders konnte ein Polydimethylsiloxan-Polyharnstoff-Copolymer/Terpolymer-Blend abgenommen und nach Abkühlen in einem Wasserbad granuliert werden.

### Beispiel 4

In einem Zweiwellenkneter der Firma Collin, Ebersberg mit 6 Heizzonen und einer Entgasungszone wurde ein Gemisch aus 60 Gew. % GENIOMER 200/70, WACKER CHEMIE AG (Polysiloxan-Harnstoff-Copolymer, Molekulargewicht Mw = 165.000 Dalton)und 40 Gew. % LOTADER 4403, Fa. ARKEMA (Ethylen-Methacrylsäureester- Methacrylsäureanhydrid-Copolymer mit 0,3 % Methacrylsäureanhydrid-Anteil)(= Terpolymer) zudosiert und in der Wärme miteinander compoundiert. Das Temperaturprofil der Heizzonen war wie folgt programmiert: Zone 1 40°C, Zone 2 140°C, Zone 3 180°C, Zone 4 190°C, Zone 5 190°C, Zone 6 175°C. Die Drehzahl betrug 120 U/min. An der Düse des Extruders konnte ein Polydimethylsiloxan-Polyharnstoff-Copolymer/Terpolymer-Blend abgenommen und nach Abkühlen in einem Wasserbad granuliert werden.

### Beispiel 5

In einem Zweiwellenkneter der Firma Collin, Ebersberg mit 6 Heizzonen und einer Entgasungszone wurde ein Gemisch aus 60 Gew. % GENIOMER 200/50, WACKER CHEMIE AG (Polysiloxan-Harnstoff-Copolymer, Molekulargewicht Mw = 143.000 Dalton)und 40 Gew. % LOTADER 4403, Fa. ARKEMA (Ethylen-Methacrylsäureester- Methacrylsäureanhydrid-Copolymer mit 0,3 % Methacrylsäureanhydrid-Anteil) (= Terpolymer) zudosiert und in der Wärme miteinander compoundiert. Das Temperaturprofil der Heizzonen war wie folgt programmiert: Zone 1 40°C, Zone 2 140°C, Zone 3 180°C, Zone 4 190°C, Zone 5 190°C, Zone 6 175°C. Die Drehzahl betrug 120 U/min. An der Düse des Extruders konnte ein Polydimethylsiloxan-Polyharnstoff-Copolymer/Terpolymer-Blend abgenommen und nach Abkühlen in einem Wasserbad granuliert werden.

### Beispiel 6

In einem Zweiwellenkneter der Firma Collin, Ebersberg mit 6 Heizzonen und einer Entgasungszone wurde ein Gemisch aus 40 Gew. % GENIOMER 80, WACKER CHEMIE AG (Polysiloxan-Harnstoff-Copolymer, Molekulargewicht Mw = 135.000 Dalton)50 Gew. % Lupolen 3020 H (Basell) und 10 Gew. % LOTADER 4403, Fa. ARKEMA (Ethylen- Methacrylsäureester- Methacrylsäureanhydrid-Copolymer mit 0,3 % Methacrylsäureanhydrid-Anteil)(= Terpolymer) zudosiert und in der Wärme miteinander compoundiert. Das Temperaturprofil der Heizzonen war wie folgt programmiert: Zone 1 40°C, Zone 2 140°C, Zone 3 170°C, Zone 4 185°C, Zone 5 185°C, Zone 6 175°C. Die Drehzahl betrug 120 U/min. An der Düse des Extruders konnte ein Polydimethylsiloxan-Polyharnstoff-Copolymer/Terpolymer-Blend abgenommen und nach Abkühlen in einem Wasserbad granuliert werden.

### Vergleichsbeispiel 1:

In einem Zweiwellenkneter der Firma Collin, Ebersberg mit 6 Heizzonen und einer Entgasungszone wurde ein Gemisch aus 60 Gew. % GENIOMER 140, WACKER CHEMIE AG (Polysiloxan-Harnstoff-Copolymer)und 40 Gew. % Lupolen 3020, Fa. BASELL (LDPE mit 0,0 % Methacrylsäureanhydrid-Anteil) zudosiert und in der Wärme miteinander compoundiert. Das Temperaturprofil der Heizzonen war wie folgt programmiert: Zone 1 40°C, Zone 2 140°C, Zone 3 180°C, Zone 4 190°C, Zone 5 195°C, Zone 6 185°C. Die Drehzahl betrug 120 U/min. An der Düse des Extruders konnte ein Polydimethylsiloxan-Polyharnstoff-Copolymer/LDPE-Blend abgenommen und nach Abkühlen in einem Wasserbad granuliert werden.

### Vergleichsbeispiel 2:

In einem Zweiwellenkneter der Firma Collin, Ebersberg mit 6 Heizzonen und einer Entgasungszone wurden 100 Gew. % GENIOMER 80, WACKER CHEMIE AG (Polysiloxan-Harnstoff-Copolymer) in der Wärme compoundiert. Das Temperaturprofil der Heizzonen war wie folgt programmiert: Zone 1 40°C, Zone 2 140°C, Zone 3 180°C, Zone 4 180°C, Zone 5 185°C, Zone 6 175°C. Die Drehzahl betrug 120 U/min. An der Düse des Extruders konnte ein Polydimethylsiloxan-Polyharnstoff-Copolymer abgenommen und nach Abkühlen in einem Wasserbad granuliert werden.

### Bestimmung der mechanischen Eigenschaften:

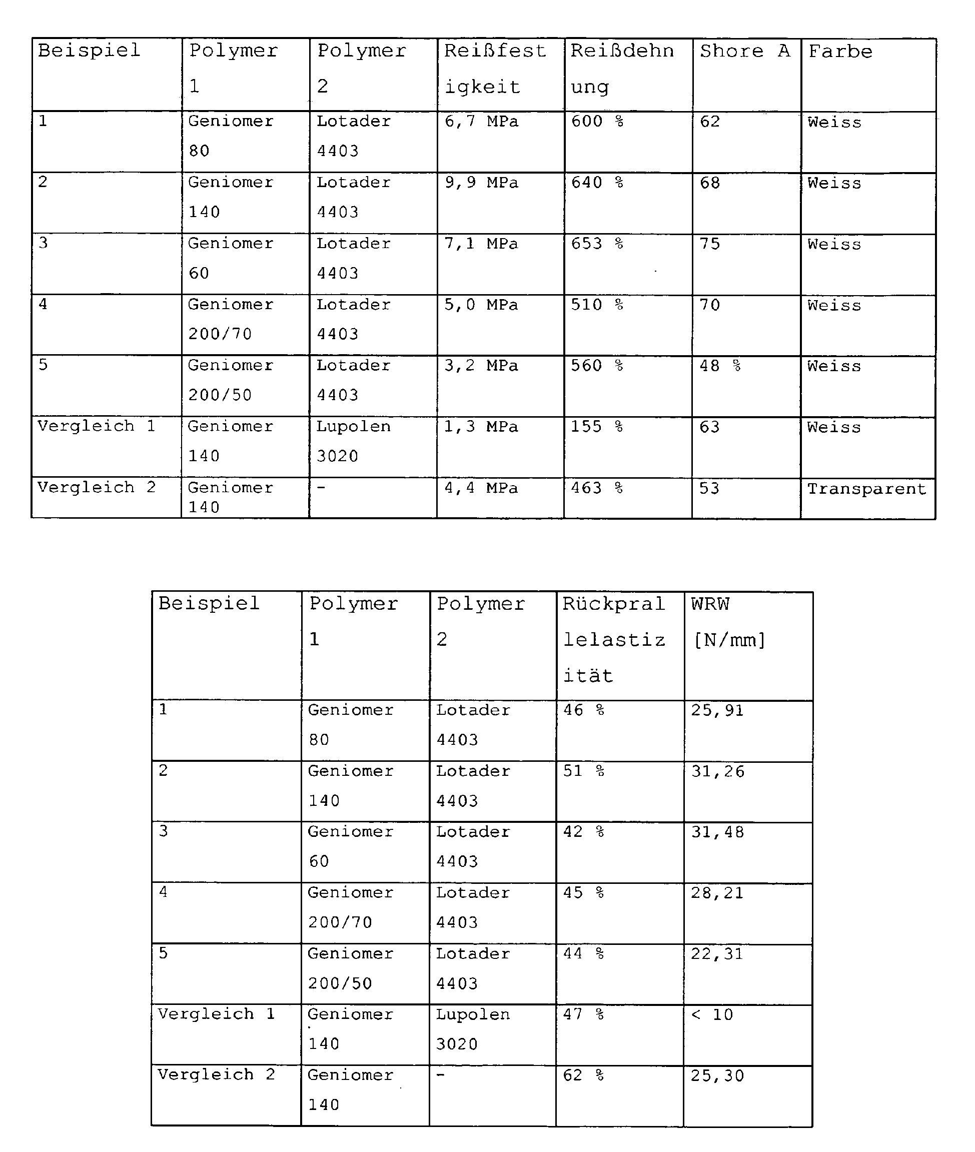

### Bestimmung der Schmelzviskositäten

Hochdruckkapillarviskosimeter der Fa. Göttfert, Düse 30 * 2 mm

| Beispiel | Temperatur | 10 1/s | 100 1/s | 1000 1/s |
|---|---|---|---|---|
| 1 | 180 | 2649 | 823 | 207 |
| 2 | 180 | 4645 | 1596 | 326 |
| 3 | 140 | 3912 | 1185 | 310 |
| 4 | 180 | 244 | 86 | 42 |
| Vergleich 2 | 170 | 2815 | 765 | 321 |

Es lässt sich erkennen, dass die verschiedenen PolymerMischungen unterschiedliche Verarbeitungscharakteristika zeigen, wobei durch Einmischen des funktionellen Thermoplasten die Schmelzviskositäten leicht erhöht werden. (Beispiel 1 verglichen mit Vergleich 2)

### Bestimmung der Abriebeigenschaften

Dabei wurden die unter Beispiel 1, 2 und Vergleichsbeispiel 1 hergestellten Materialien zu einer Folie von etwa 100 µm Dicke extrudiert und auf ein Polyamidgewebe aufgebügelt.

| Beispiel | Anzahl Scrubbs | Farbe |
|---|---|---|
| 6 | 350 | Weiss |
| 2 | 250 | Weiss |
| Vergleich 1 | 100 | Weiss |

### Bestimmung der Haftung:

Dabei wurden die unter Beispiel 3, 4 und Vergleichsbeispiel 2 hergestellten Materialien zu einer Folie von etwa 300 µm Dicke extrudiert, dann zwischen zwei PP-Folien (500 µm) gelegt und anschließend bei einem Druck von 5 bar für 15 Minuten bei 150 °C verpresst. Anschließend wurde die Haftung getestet durch Abziehen des Materials in einem Winkel von 180 ° (Peel-Test)

| **Beispiel** | **PP-Folie** |
|---|---|
| 1 | > 3 N/mm |
| 2 | > 3 N/mm |
| 3 | > 3 N/mm |
| 4 | > 3 N/mm |
| Vergleich 1 | < 1 N/mm |

## Patentansprüche

1. Polymermischung enthaltend
a) ein Organopolysiloxan/Polyharnstoff/Polyurethan-copolymer (A) der allgemeinen Formel (1) 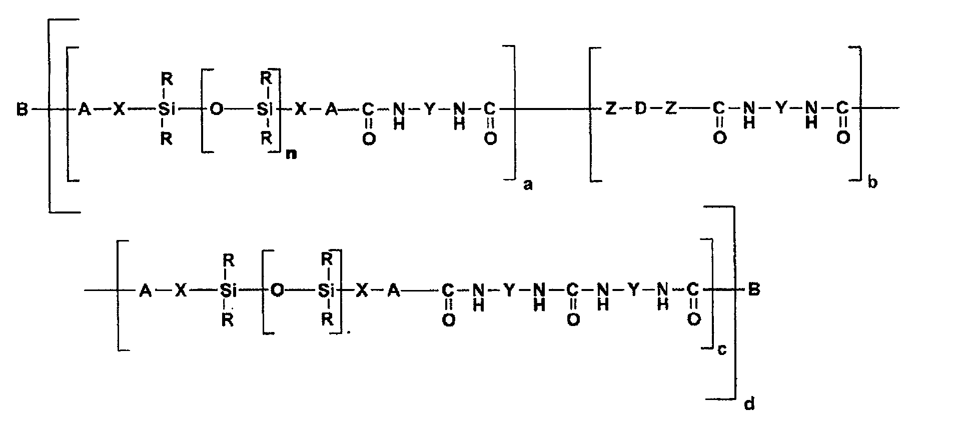 und
b) ein thermoplastisches Polymer, welches eine funktionelle Gruppe aufweist, die aus Epoxy oder Carbonsäure, Carbonsäureester oder Carbonsäureanhydrid ausgewählt wird und gegebenenfalls
c) ein nicht-reaktives thermoplastisches Polymer,
wobei
**R** einen einwertigen, gegebenenfalls durch Fluor oder Chlor substituierten Kohlenwasserstoffrest mit 1 bis 20 Kohlenstoffatomen bedeutet,
X einen **CR²₂** -Rest oder einen Alkylen-Rest mit 1-20 Kohlenstoffatomen, in dem einander nicht benachbarte Methyleneinheiten durch Gruppen -O- ersetzt sein können, bedeutet,
**A** ein Sauerstoffatom oder eine Aminogruppe -NR'-,
**Z** ein Sauerstoffatom oder eine Aminogruppe -NR'-,
**R'** Wasserstoff oder einen Alkylrest mit 1 bis 10 Kohlenstoffatomen,
**Y** einen zweiwertigen, gegebenenfalls durch Fluor oder Chlor substituierten Kohlenwasserstoffrest mit 1 bis 20 Kohlenstoffatomen,
**D** einen gegebenenfalls durch Fluor, Chlor, C₁-C₆-Alkyl- oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder - OCOO-, ersetzt sein können,
**B** einen funktionellen oder nicht-funktionellen organischen oder siliziumorganischen Rest,
**n** eine Zahl von 1 bis 4000,
**a** eine Zahl von mindestens 1,
**b** eine Zahl von 0 bis 100,
**c** eine Zahl von 0 bis 100 und
**d** eine Zahl größer 0 bedeuten.

2. Polymermischung nach Anspruch 1, **dadurch gekennzeichnet, dass** der Gehalt der Polydimethylsiloxan-Einheiten der Organopolysiloxan/Polyharnstoff/Polyurethan-copolymere zwischen 50 und 98 Gew.%, bezogen auf das Gesamtgewicht des copolymers, beträgt.

3. Polymermischung nach Anspruch 1 oder 2, **dadurch gekennzeichnet, dass** der Anteil der Organopolysiloxan/Polyharnstoff/Polyurethan-copolymere in der Mischung zwischen 5 und 90 Gew.%, bezogen auf das Gesamtgewicht der Polymermischung, beträgt.

4. Polymermischung nach einem oder mehreren der Ansprüche 1 bis 3, **dadurch gekennzeichnet, dass** der Anteil der funktionellen Gruppe am thermoplastischen Material zwischen 0,1 und 40 Gew.-%, bezogen auf das thermoplastische Material, beträgt.

5. Polymermischung nach einem oder mehreren der Ansprüche 1 bis 4, **dadurch gekennzeichnet, dass** der Anteil des reaktiven Thermoplasten in der Mischung zwischen 5 und 95 Gew.%, bezogen auf die Polymermischung, beträgt.

6. Verfahren zur Herstellung einer Polymermischung nach Anspruch 1, **dadurch gekennzeichnet, dass** a) ein Organopolysiloxan/Polyharnstoff/Polyurethan-copolymer (A) und b) ein thermoplastisches Polymer, welches eine funktionelle Gruppe aufweist und gegebenenfalls
c) ein nicht-reaktives thermoplastisches Polymer vermischt werden.

7. Verfahren zur Herstellung einer Polymermischung nach Anspruch 6, **dadurch gekennzeichnet, dass** das Mischen bei einer Temperatur von 30 °C bis 240 °C durchgeführt wird.

8. Klebstoff, Dichtstoff, Formkörper oder Additiv, **dadurch gekennzeichnet, dass** sie eine Polymermischung nach einem oder mehreren der Ansprüche 1 bis 5 oder hergestellt nach Anspruch 6 oder 7 aufweisen.

9. Abhäsive Schicht oder Coextrudat, das eine abhäsive Schicht aufweist, **dadurch gekennzeichnet, dass** die abhäsive Schicht eine Polymermischung nach einem oder mehreren der Ansprüche 1 bis 5 oder hergestellt nach Anspruch 6 oder 7 aufweist.

## Claims

1. Polymer mixture containing
a) an organopolysiloxane-polyurea-polyurethane copolymer (A) of general formula (1) 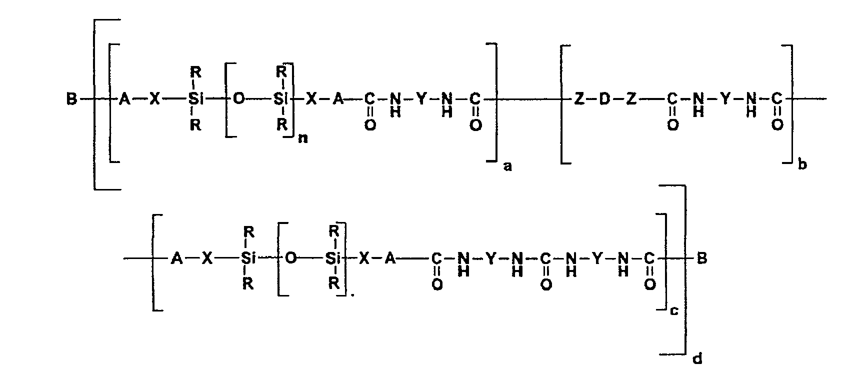 and
b) a thermoplastic polymer having a functional group selected from epoxy or carboxylic acid, carboxylic ester or carboxylic anhydride, and optionally
c) a nonreactive thermoplastic polymer,
wherein
**R** is a monovalent optionally fluorine- or chlorine- substituted hydrocarbyl radical having 1 to 20 carbon atoms,
**X** is a CR²₂ radical or an alkylene radical which has 1-20 carbon atoms and in which mutually nonadjacent methylene units may be replaced by -O- groups,
**A** is an oxygen atom or an amino group -NR'-,
**Z** is an oxygen atom or an amino group -NR'-,
**R'** is hydrogen or an alkyl radical having 1 to 10 carbon atoms,
**Y** is a divalent optionally fluorine- or chlorine- substituted hydrocarbyl radical having 1 to 20 carbon atoms,
**D** is an alkylene radical of 1 to 700 carbon atoms which is optionally substituted by fluorine, chlorine, C₁-C₆-alkyl or C₁-C₆-alkyl ester and in which mutually nonadjacent methylene units may be replaced by -O-, -COO-, -OCO- or -OCOO- groups,
**B** is a functional or nonfunctional organic or organosilicon radical,
**n** is a number from 1 to 4000,
**a** is a number of at least 1,
**b** is a number from 0 to 100,
**c** is a number from 0 to 100, and
**d** is a number greater than 0.

2. Polymer mixture according to Claim 1, **characterized in that** the polydimethylsiloxane unit content of the organopolysiloxane-polyurea-polyurethane copolymers is between 50% and 98% by weight, based on the total weight of the copolymer.

3. Polymer mixture according to Claim 1 or 2, **characterized in that** the proportion of the mixture which is attributable to the organopolysiloxane-polyurea-polyurethane copolymers is between 5% and 90% by weight, based on the total weight of the polymer mixture.

4. Polymer mixture according to one or more of Claims 1 to 3, **characterized in that** the proportion of thermoplastic material which is attributable to the functional group is between 0.1% and 40% by weight, based on the thermoplastic material.

5. Polymer mixture according to one or more of Claims 1 to 4, **characterized in that** the proportion of the mixture which is attributable to the reactive thermoplastic is between 5% and 95% by weight, based on the polymer mixture.

6. Process for producing a polymer mixture according to Claim 1, **characterized in that** a) an organopolysiloxane-polyurea-polyurethane copolymer (A) and
b) a thermoplastic polymer having a functional group and optionally
c) a nonreactive thermoplastic polymer are mixed.

7. Process for producing a polymer mixture according to Claim 6, **characterized in that** the mixing is carried out at a temperature of 30°C to 240°C.

8. Adhesive, sealant, molded article or additive, **characterized in that** they include a polymer mixture according to one or more of Claims 1 to 5 or obtained according to Claim 6 or 7.

9. Abhesive layer or coextrudate having an abhesive layer, **characterized in that** the abhesive layer includes a polymer mixture according to one or more of Claims 1 to 5 or obtained according to Claim 6 or 7.

## Revendications

1. Mélange de polymères contenant
a) un copolymère organopolysiloxane/polyurée/ polyuréthanne (A) de formule générale (1) 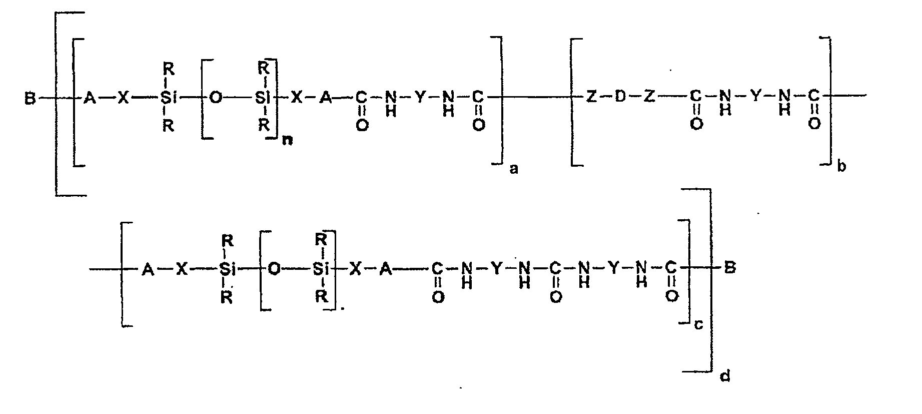 et
b) un polymère thermoplastique, qui comporte un groupe fonctionnel qui est choisi parmi époxy ou acide carboxylique, ester d'acide carboxylique ou anhydride d'acide carboxylique et éventuellement
c) un polymère thermoplastique non réactif,
R représentant un radical hydrocarboné monovalent ayant de 1 à 20 atomes de carbone, éventuellement substitué par le fluor ou le chlore,
X représentant un radical CR²₂ ou un radical alkylène ayant 1-20 atomes de carbone, dans lequel des unités méthylène non adjacentes l'une à l'autre peuvent être remplacées par des groupes -O-,
**A** représentant un atome d'oxygène ou un groupe amino -NR'-,
**Z** représentant un atome d'oxygène ou un groupe amino -NR'-,
**R'** représentant un atome d'hydrogène ou un radical alkyle ayant de 1 à 10 atomes de carbone,
**Y** représentant un radical hydrocarboné divalent ayant de 1 à 20 atomes de carbone, éventuellement substitué par le fluor ou le chlore,
**D** représentant un radical alkylène ayant de 1 à 700 atomes de carbone, éventuellement substitué par le fluor, le chlore, alkyle en C₁-C₆ ou ester alkylique en C₁-C₆, dans lequel des unités méthylène non adjacentes l'une à l'autre peuvent être remplacées par des groupes -O-, -COO-, -OCO- ou -OCOO-,
**B** représentant un radical organique ou organosilicié fonctionnel ou non fonctionnel,
**n** représentant un nombre valant de 1 à 4000,
**a** représentant un nombre valant au moins 1,
**b** représentant un nombre valant de 0 à 100,
**c** représentant un nombre valant de 0 à 100 et
**d** représentant un nombre supérieur à 0.

2. Mélange de polymères selon la revendication 1, **caractérisé en ce que** la teneur en unités polydiméthylsiloxane des copolymères organopolysiloxane/polyurée/polyuréthanne est comprise entre 50 et 98 % en poids, par rapport au poids total du copolymère.

3. Mélange de polymères selon la revendication 1 ou 2, **caractérisé en ce que** la proportion des copolymères organopolysiloxane/polyurée/polyuréthanne dans le mélange est comprise entre 5 et 90 % en poids, par rapport au poids total du mélange de polymères.

4. Mélange de polymères selon une ou plusieurs des revendications 1 à 3, **caractérisé en ce que** la proportion du groupe fonctionnel dans le matériau thermoplastique est comprise entre 0,1 et 40 % en poids, par rapport au matériau thermoplastique.

5. Mélange de polymères selon une ou plusieurs des revendications 1 à 4, **caractérisé en ce que** la proportion de la matière thermoplastique réactive dans le mélange est comprise entre 5 et 95 % en poids, par rapport au mélange de polymères.

6. Procédé pour la préparation d'un mélange de polymères selon la revendication 1, **caractérisé en ce qu'**on mélange a) un copolymère organopolysiloxane/ polyurée/polyuréthanne (A) et b) un polymère thermoplastique, qui comporte un groupe fonctionnel, et éventuellement
c) un polymère thermoplastique non réactif.

7. Procédé pour la préparation d'un mélange de polymères selon la revendication 6, **caractérisé en ce qu'**on effectue le mélange à une température de 30 °C à 240 °C.

8. Adhésif, matière d'étanchéité, corps moulé ou additif, **caractérisés en ce qu'**ils comportent un mélange de polymères selon une ou plusieurs des revendications 1 à 5 ou préparé selon la revendication 6 ou 7.

9. Couche antiadhésive ou coextrudat qui comporte une couche antiadhésive, **caractérisés en ce que** la couche antiadhésive comporte un mélange de polymères selon une ou plusieurs des revendications 1 à 5 ou préparé selon la revendication 6 ou 7.
